# FASCICULE DE BREVET EUROPEEN

(11) **EP 0 474 532 B1**
(45) Date de publication et mention de la délivrance du brevet: **14.12.1994**
(21) Numéro de dépôt: 91402271.0
(22) Date de dépôt: 20.08.1991
(51) Int. Cl.: F16H 7/12

(54) **Tendeur de courroie d'un système de distribution d'un moteur de véhicule automobile**
Riemenspanner für einen Nockenwellenantrieb eines Fahrzeugmotors
Belt tensioner for a camshat drive system of an automotive engine

(30) Priorité: 07.09.1990 FR 9011145
(43) Date de publication de la demande: 11.03.1992
(73) Titulaire: AUTOMOBILES PEUGEOT, 75116 Paris (FR); AUTOMOBILES CITROEN, 92200 Neuilly-sur-Seine (FR)
(72) Inventeur: Dore, Martial, F-78000 Versailles (FR)
(74) Mandataire: Habasque, Etienne Joel Jean-François

(56) Documents cités:
- DE-A- 3 707 917
- FR-A- 2 634 531
- US-A- 3 060 760
- US-A- 3 374 686
- US-A- 4 713 045

## Description

La présente invention concerne un tendeur de courroie notamment d'un système de distribution d'un moteur de véhicule automobile.

Dans les systèmes de distribution de moteurs de véhicules automobiles, à géométrie de distribution conventionnelle, la tension de pose de la courroie est assurée par l'intermédiaire d'un galet tendeur statique qui, dans la plupart des cas, est un galet dont le mécanisme de tension est piloté par un système dit excentrique, qui se caractérise par une excentration de son axe de rotation par rapport à son axe d'articulation.

L'intérêt d'utiliser un tel galet réside dans son encombrement minimal, car son mécanisme de tension lui est interne.

Ce type de galet est donc en mesure d'assurer la tension de la courroie lors de sa pose, et de compenser les variations statiques de la tension de la courroie, qui résultent de la différence entre sa longueur primitive théorique à sa longueur primitive réelle.

La longueur primitive théorique d'une courroie dépend, en les considérant à leurs limites extrêmes supérieure et inférieure, des tolérances respectives:
- des entraxes des différentes poulies entraînées par la courroie;
- de leurs diamètres primitifs;
- de l'excentration.

Cependant, ce type de tendeur est dans l'incapacité de compenser les variations dites dynamiques de la tension de la courroie, qui résultent de la différence entre la longueur primitive réelle de celle-ci, et ses longueurs primitives, théorique et réelle, dilatées (moteur en fonctionnement) et de son usure propre.

La longueur primitive théorique dilatée d'une courroie dépend, en la considérant aux bornes calorifiques d'utilisation du moteur (-30°C, +120°C), de sa longueur primitive théorique indiquée précédemment, tandis que sa longueur primitive réelle dilatée dépend, en la considérant aux bornes calorifiques d'utilisation du moteur, de sa longueur primitive réelle indiquée ci-dessus.

Les répercussions de ces variations au niveau de la courroie, se traduisent par une surtension de celle-ci, entraînant l'apparition de contraintes, parfois élevées, sur les axes des poulies, voire même sa détension, occasionnant des sauts de dents et des vibrations, sources de bruits intempestifs.

En conséquence, il a été développé dans l'état de la technique, un certain nombre de tendeurs permettant de remplir à la fois le rôle de tendeur statique et dynamique.

On connaît par exemple d'après le document générique FR-A-2 634 531, un tendeur de courroie notamment d'un système du distribution d'un moteur de véhicule automobile, du type comportant un actionneur et un galet tendeur excentré, dans lequel le galet est monté excentré sur l'actionneur et cet ensemble se déplace pour rattraper les jeux statiques.

Le jeu dynamique est ensuite rattrapé par rotation du galet.

Le dispositif décrit dans ce document ne permet pas de dissocier le galet et l'actionneur proprement dit, ce qui peut compliquer l'implantation de ce tendeur dans un moteur.

En outre, il ne permet pas d'exercer d'efforts très importants sur le galet.

Le but de l'invention est donc de proposer un tendeur de courroie qui puisse à la fois rattraper les jeux statiques et dynamiques d'une courroie, et qui soit simple, fiable, d'un prix de revient peu élevé, dont l'encombrement soit le plus réduit possible et dont l'implantation dans un moteur soit la plus simple possible.

A cet effet, l'invention a pour objet un tendeur de courroie qui montre les caractéristiques de la revendication 1.

Selon un mode de réalisation, ledit levier présente la forme d'un V inversé.

L'invention sera mieux comprise à l'aide de la description qui va suivre, donnée uniquement à titre d'exemple et faite en se référant aux dessins annexés, sur lesquels :
- la Fig.1 représente un schéma d'implantation d'un tendeur permettant de rattraper un jeu statique de courroie, de l'état de la technique;
- la Fig.2 représente un schéma d'implantation d'un tendeur de courroie selon l'invention; et
- la Fig.3 représente une vue en perspective éclatée d'un tendeur de courroie selon l'invention.

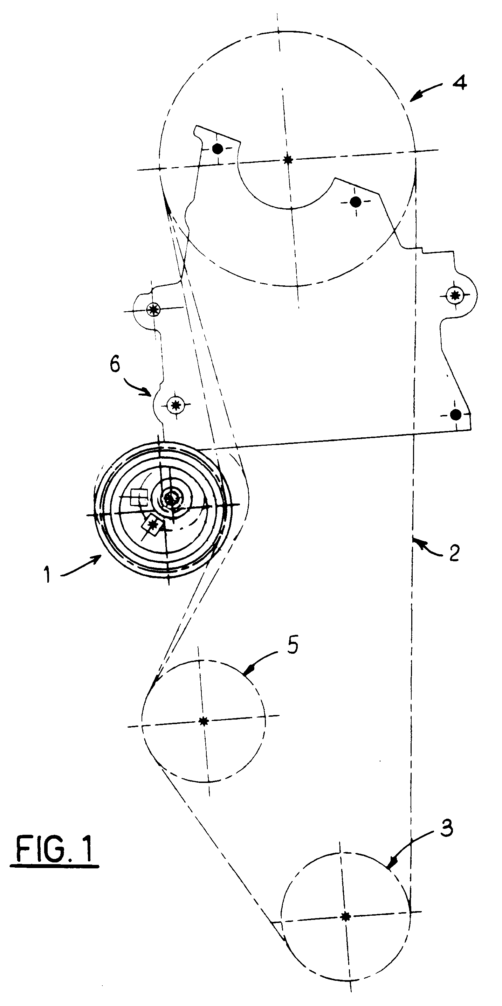

Ainsi qu'on peut le voir sur la Fig. 1, qui représente un schéma de distribution d'un moteur de véhicule automobile, celui-ci comporte un tendeur excentré 1 assurant un préréglage en tension d'une courroie de distribution 2, permettant de transmettre la puissance fournie par un vilebrequin 3 à d'autres organes du véhicule, comme par exemple la poulie d'arbre à cames 4 et la poulie de commande de la pompe à eau 5.

Ce tendeur de courroie excentré 1 est disposé sur une platine de support 6 reliée au reste du moteur du véhicule.

Ainsi qu'on l'a expliqué précédemment, ce tendeur est incapable de rattraper des variations dynamiques de tension de la courroie et on est donc obligé de lui adjoindre un tendeur dynamique.

Une telle conception est relativement complexe et présente les inconvénients mentionnés précédemment.

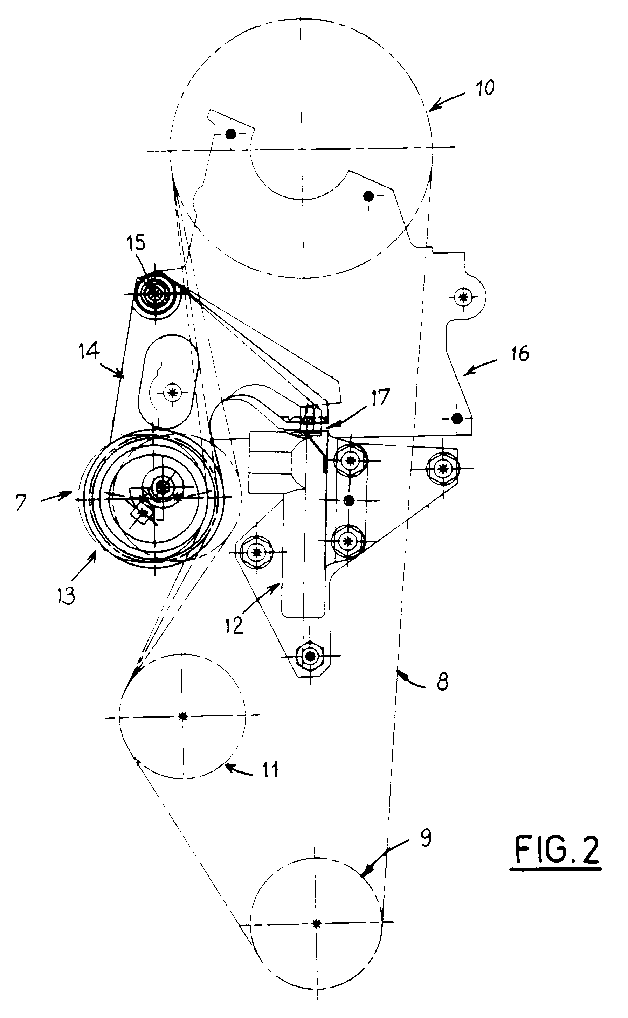

Comme on peut le voir sur la Fig.2, qui représente un système de distribution d'un moteur de véhicule automobile, comportant un tendeur de courroie selon l'invention, ce tendeur 7 permet de régler la tension d'une courroie 8 de distribution de la puissance délivrée par un vilebrequin 9 à la poulie 10 d'un arbre à cames du moteur et à la poulie de commande de la pompe à eau 11.

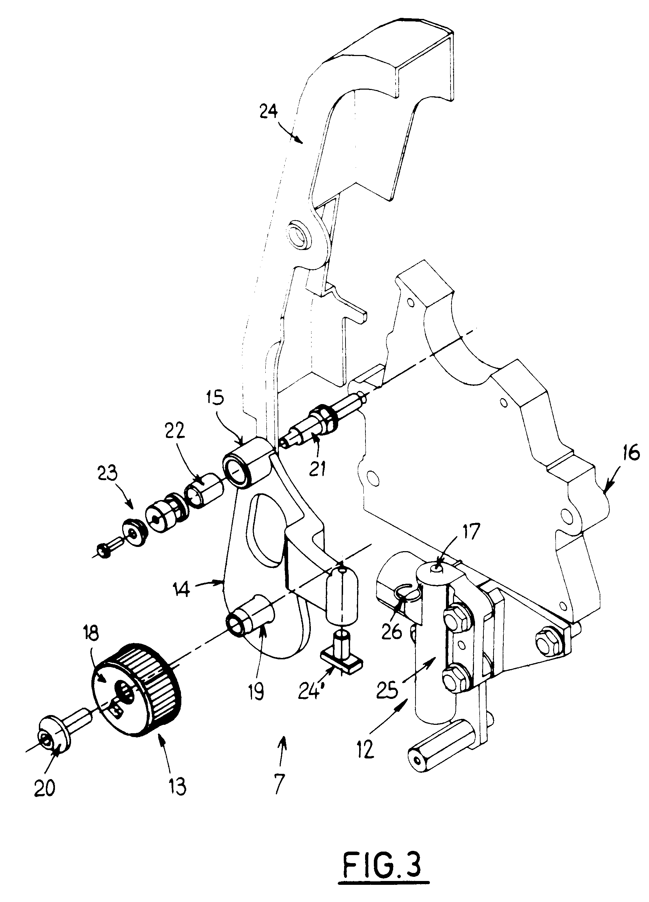

Comme on peut le voir sur cette Fig.2 et plus clairement sur la Fig.3, ce tendeur de courroie 7 comporte un actionneur 12 de type connu en soi et un galet tendeur excentré 13. Ce galet tendeur excentré 13 est disposé à l'une des extrémités d'un levier de manoeuvre 14 dont la partie centrale est articulée en 15, sur une platine de support 16 adaptée pour être fixée sur le reste du moteur. L'autre extrémité de ce levier 14 est adaptée pour coopérer avec la tige 17 de sortie de l'actionneur afin de commander la position du levier par rapport à la platine et donc la position du galet pour maintenir la tension de la courroie.

Le galet 13 est monté autour d'un moyeu excentré 18 disposé autour d'une partie en saillie 19 prévue à l'extrémité correspondante du levier 14 et fixé sur celle-ci par l'intermédiaire d'une vis de blocage 20.

Le levier est monté articulé en 15 par rapport à la platine de support 16 par l'intermédiaire d'une tige d'articulation 21, autour de laquelle peut être disposé un coussinet en bronze 22 et à l'extrémité de laquelle sont prévus des moyens de maintien en position 23 comprenant par exemple une vis.

Un capot 24 peut également être fixé sur la platine de support 16 pour protéger la courroie.

L'extrémité du levier adaptée pour coopérer avec la tige de sortie 17 de l'actionneur 12, peut comporter un patin de contact 24' dont la résistance mécanique est adaptée aux efforts demandés à ce niveau du levier.

L'actionneur est en fait un organe autonome qui peut être assimilé à un amortisseur, constitué d'un corps 25 et de la tige 17 qui après retrait de sa goupille de retenue 26 et grâce à un mécanisme interne, possède une course rentrante, par exemple de 4 mm et une course sortante, par exemple de 8 mm, par rapport à sa position initiale. Cet amortisseur peut déployer un effort par exemple de 10 DaN.

Le tendeur de courroie selon l'invention est donc en mesure de compenser les variations statiques de la tension de la courroie et d'appliquer une tension de pose à celle-ci par déplacement du moyeu 18 et donc du galet 13 autour de l'axe d'articulation du moyeu sur le levier, mais également de compenser les variations dynamiques de la géométrie de distribution, sous la commande de l'actionneur qui règle en conséquence, la position du levier et donc du galet.

On conçoit donc que le tendeur selon l'invention confère à la courroie, une tension quasiment constante, quel que soit le régime du moteur.

La mise en oeuvre du tendeur de courroie qui vient d'être décrit peut s'effectuer de la manière suivante :

Il y a lieu dans un premier temps de chausser la courroie de distribution sur les différentes poulies du système de distribution.

On amène ensuite le galet 13 en position à l'aide de son mécanisme excentrique jusqu'à ce que le levier 14 vienne en butée contre la tige de sortie 17 de l'actionneur.

Le galet fait alors office de galet enrouleur qui compense les variations statiques de tension de la courroie et qui peut éventuellement attribuer une légère pré-tension à cette courroie.

On serre ensuite le moyeu 18 du galet sur l'extrémité correspondante du levier 14 à l'aide de la vis 20 et on retire la goupille de retenue 26 de la tige de sortie de l'actionneur, de sorte que celui-ci applique un effort sur l'extrémité correspondante de ce levier, pour amener celui-ci et donc le galet en position de tension de la courroie et de compensation des variations dynamiques de la tension de celle-ci.

On conçoit donc qu'avec un seul et même galet, on remplit les fonctions de tendeur statique et dynamique, ce qui permet de simplifier le système de distribution d'un moteur, de réduire son prix de revient tout en consolidant la fonction première du tendeur dynamique.

Il va de soi bien entendu que d'autres modes de réalisation peuvent être envisagés et que par exemple le patin 24 à l'extrémité correspondante du levier peut être remplacé par une zone de résistance accrue de celui-ci pour supporter les efforts demandés à cette extrémité.

## Revendications

1. Tendeur de courroie d'un système de distribution d'un moteur de véhicule automobile, du type comportant un actionneur (12) et un galet tendeur excentré (13) disposé de manière à coopérer avec une tige de sortie (17) de l'actionneur (12) afin de commander la position du galet (13) pour tendre une courroie, caractérisé en ce que le galet tendeur excentré (13) est disposé excentré à l'une des extrémités d'un levier de manoeuvre (14) dont une partie centrale est articulée (en 15) sur une platine de support (16) adaptée pour être fixée sur le reste du moteur, et dont l'autre extrémité est adaptée pour coopérer avec la tige de sortie (17) de l'actionneur (12) afin de commander la position du levier (14) et donc du galet (13) tendeur.

2. Tendeur selon la revendication 1, caractérisé en ce que ledit levier (14) présente la forme d'un V inversé.

## Claims

1. A belt tensioner for a distribution system in an engine for a motor vehicle, of the type comprising an actuator (12) and an eccentric tensioning roller (13) arranged so as to co-operate with an output rod (17) of the actuator (12), so as to control the position of the roller (13) for tensioning a belt, **characterised in that** the eccentric tensioning roller (13) is arranged eccentrically to one of the ends of an operating lever (14), a central part of which is articulated (at 15) on a support plate (16) adapted so as to be secured on the remainder of the engine, and the other end of the said lever is adapted so as to co-operate with the output rod (17) of the actuator (12) so as to control the position of the lever (14) and hence the tensioning roller (13).

2. A tensioner in accordance with claim 1, **characterised in that** the said lever (14) is shaped as an inverted V.

## Patentansprüche

1. Riemenspanner für einen Nockenwellenantrieb eines Fahrzeugmotors, eines aus einem Stellglied (12) und einer exzentrierten Spannrolle (13) bestehenden Typs, welche in der Weise angeordnet ist, daß sie mit einer austretenden Stange (17) des Stellglieds (12) zusammenwirkt, um die Position der Rolle (13) beim Spannen eines Riemens zu steuern, **dadurch gekennzeichnet,** daß die exzentrierte Spannrolle (13) exzentriert an einem der Enden eines Bedienungshebels (14) angeordnet ist, dessen Mittelteil (bei 15) gelenkig auf einer zur Befestigung am übrigen Motor geeigneten Halteplatte (16) angebracht ist, und dessen anderes Ende zum Zusammenwirken mit der austretenden Stange (17) des Stellglieds (12) zur Steuerung der Position des Hebels (14) und damit der der spannrolle (13) vorgesehen ist.

2. Spanner nach Patentanspruch 1, **dadurch gekennzeichnet,** daß der besagte Hebel (14) die Form eines umgekehrten V aufweist.
